(19) Europäisches Patentamt
European Patent Office
Office européen des brevets

(11) **EP 4 322 083 B1**

(12) **EUROPEAN PATENT SPECIFICATION**

(45) Date of publication and mention
of the grant of the patent:
**02.07.2025 Bulletin 2025/27**

(21) Application number: **22190134.1**

(22) Date of filing: **12.08.2022**

(51) International Patent Classification (IPC):
**G06Q 10/0631** *(2023.01)*

(52) Cooperative Patent Classification (CPC):
**G06Q 10/063112**

(54) **TECHNIQUES TO DISTRIBUTE REMOTE DRIVING TASKS OF VEHICLES TO A REMOTE OPERATOR**

VERFAHREN ZUR VERTEILUNG VON FERNFAHRAUFGABEN VON FAHRZEUGEN AN EINEN ENTFERNTEN BEDIENER

TECHNIQUES DE DISTRIBUTION DE TÂCHES DE CONDUITE À DISTANCE DE VÉHICULES À UN OPÉRATEUR À DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.02.2024 Bulletin 2024/07**

(73) Proprietor: **Deutsche Telekom AG
53113 Bonn (DE)**

(72) Inventor: **ANGIERSKI, André
12489 Berlin (DE)**

(74) Representative: **Braun-Dullaeus Pannen
Emmerling
Patent- & Rechtsanwaltspartnerschaft mbB
Platz der Ideen 2
40476 Düsseldorf (DE)**

(56) References cited:
**US-A1- 2020 062 267     US-A1- 2020 282 980**

**Description**

The invention relates to a method, a communication system, a remote driving schedule module, and a computer program to distribute remote driving tasks of vehicles to remote operators.

In the state of the art it is already possible to perform remote operations of railway vehicles. A remote control train is a railway locomotive that can be operated with a remote control. It differs from a conventional locomotive in that a remote control system has been installed in the locomotive, which uses a radio transceiver system to communicate with remote operators. The locomotive is operated by a person not physically present at the controls within the confines of the locomotive cab. Those remote systems have been in use for many years in the railroad industry, including industrial applications such as bulk material load-out, manufacturing, process and industrial switching.

US 2020/062267 A1 discloses a system for profiling and ranking remotely controlled vehicle operators, and a system for matching an available operator to a vehicle requesting remote support.

US 2020/282980 A1 discloses a tele-operation service to remotely control or drive vehicles. The corresponding tele-operation devices are selected based on their availability.

To facilitate such a remote control of the train, the remote control system comprises at least an automatic train operation onboard unit and/or a remote control onboard unit onboard unit that provides an interface to the train. The automatic train operation onboard unit, which has self-driving functionalities, can comprise the remote control unit. The remote control unit is designed to execute the driving commands of a remote-driver. The automatic train operation onboard unit and/or the remote control onboard unit captures video data or receives video data by camera means of the train, wherein this video data basically shows the same field of view that the train's driver would normally see inside the locomotive cab. The automatic train operation onboard unit and/or the remote control onboard unit also captures or receives diagnostic and/or status train information.

The automatic train operation onboard unit and/or the remote control onboard unit onboard unit comprises a communication interface, in particular a radio transceiver, that is configured to send the video data and the diagnostic and/or status train information to a remote operator desk and to receive operational commands from the remote operator desk. The remote operator desk, which is also part of the remote control system, comprises an interface to receive the data sent by the automatic train operation onboard unit and/or the remote control onboard unit and to send operational commands to the automatic train operation onboard unit and/or the remote control onboard unit.

Another approach of operating vehicles, in particular trains, goes into the direction of fully autonomous driving capabilities. In this scenario, the driver shall not be needed at all in the ideal case. It is possible to combine the remote control onboard unit with an automatic train operation onboard unit to fulfill those tasks and to provide it with appropriate self-driving algorithms since the remote control onboard unit already captures the necessary data for the self-driving scenario. If the self-driving would work perfectly, a radio transceiver of the remote control onboard unit (RC-OB) that is configured to communicate with a remote driver might not be necessary at all.

However, it is expected that a fully autonomous driving will not be possible within the near future because they might always be "unexpected" traffic situations that require the knowledge of skilled driver, in particular a remote driver, who can take over the driving in "critical" driving situations.

For future scenarios, it is expected that it is possible that only a few remote operators can supervise and control a whole fleet of trains, ships, drones, and/or farm vehicles as the control and supervision tasks will only be required occasionally because the autonomous driving capabilities will constantly get better. These cases occur when the regular automation systems, for example the automatic train operation onboard unit (ATO-OB), onboard the new vehicle is not able to fulfill a required driving task. This might be the case due to detecting a malfunctioning of the system, due to detecting an unexpected traffic situation and/or due to detecting a traffic situation that is being defined to be outside the capability of the autonomous tracking system. In those cases, it is necessary that a remote operator takes over the driving of the vehicle.

In the view of above, it is an object of the present invention to provide techniques to enable a highly flexible and scalable solution for remote control of railway vehicles (such as trains), ships, drones, and/or farm vehicles (such as tractors).

The railway vehicles, ships, drones, and/or farm vehicles have the characteristic feature in common that they can be operated in "low traffic" situations in which the remote operation of such vehicles is not as time critical as it is with cars. For example, the trains travel on railways, wherein the railways guide the trains along their way and they typically do not interact frequently with other trains, so that they are especially suited for remote control operation. If ships travel over the ocean, there is also only minor traffic so that they can also be steered by remote control operation. However, this can change if the ship enters a harbor region. Nevertheless, it is possible that a real person enters the ship and takes over the control if the ship enters such a harbor region. Typically, farm vehicles are alone on the field and can greatly be controlled by remote operation.

This object is solved by the features of the independent claims.

The features of the various aspects of the invention described below or the various examples of implementation may be combined with each other, unless this is explicitly excluded or is technically impossible.

According to a first aspect of the invention, a method to distribute remote driving tasks of trains, ships, drones, and/or farm vehicles to remote operators is disclosed, wherein the method comprises

- receiving information about a planned and/or a present remote driving task of a vehicle;

  ◦ the present remote driving task can be assessed by the ATO-OB or the RC-OB of the vehicle that detects if a certain traffic situation is beyond the scope of the self-driving capabilities of the vehicle.
  The RC-OB or even the ATO-OB can detect, e. g by means of a neural network and based on pictures captured in traveling direction of the vehicle, if the "circumstances" correspond to a traffic situation that can be dealt with by the self-driving capabilities or not. If this traffic situation is beyond the self-driving capabilities or if the vehicle shall be operated by a remote driver according to a plan, then information about this traffic situation are captured and/or generated, in particular by the automatic train operation onboard unit and/or the remote control onboard unit, and can be send by wireless communication means to a server that is configured to receive this information; the information can comprise information about the kind vehicle, kind of traffic situation, diagnostic information etc.
  The information is such that it can be used as a basis to determine "what the driving task is" and hence which remote operator requirement profile and workspace requirement profile is needed to execute the driving task;
  o in particular, this information can be received by a remote driving scheduler (RDS) that will be explained in the following;
  o the invention can make use of a mobile communication network, in particular according to 4G, 5G, WiFi in general or further standards, wherein the 5G standard is particularly suited to tailor the characteristics of the network according to the demands of a remote driving operation. However, it is also possible that the communication network is a mixture of a mobile communication network and a fixed line network (xDSL), wherein the communication between the vehicle and the server is realized by mobile communication means, wherein a communication between the server and a remote operator backspace can be realized as being a fixed line and/or a mobile communication environment.

- providing the information to a task-creation-algorithm, wherein the task-creation-algorithm determines a remote-driver requirement profile based on the information;

  o the task-creation-algorithm can be implemented on the server. The server receives the information via a communication interface from the vehicle, whereas this information serves as an input for the task-creation-algorithm. The task-creation-algorithm analyzes the information and extracts parameters from the information that describe parameters of the task. A simple example could be that the information comprises an ID of the train, for example that the train is an ID=ICE3 of the Deutsche Bahn, so that the parameter ID=ICE3 is being extracted, wherein this task parameter determines that the remote-driver's requirement is at least a valid qualification/-certificate to remotely operate an ICE3. The same can be applied for the remote workplace requirement which shall fulfill the needs to operate the same train type, in the example ICE3.

- providing the requirement profile to a mapping algorithm, wherein the mapping algorithm searches for remote-drivers that match the requirement profile and selects at least a subset of the remote-drivers that match the requirement profile;

  o as a continuation of the example above, the requirement profile states that the remote-driver needs to have a qualification for an ID = ICE3 train. The mapping algorithm can extract this information from the requirement profile and search within a database for entries of remote-drivers with the ID = ICE3 qualification. It is possible that multiple remote-drivers have such a qualification. In addition, the requirement profile can also have information about a desired or needed driver-rating score for this driving task. In an embodiment, the mapping algorithm does select those remote-driver that match the necessary qualification and match the desired driver-rating score, whereas the algorithm does not select additionally available drivers with a better driver-rating score. The relational behind this is that those drivers are more flexible than the "lower" rated drivers and shall not be taken up unnecessarily for "simple" tasks.

- assigning the driving task of the vehicle to at least one of the remote-drivers of the selection. The assigning process can use an assigning algorithm.

  ◦ In this context, assigning the driving task basically means to make the driving task available to the remote driver; i.e. to establish a corresponding data connection with the remote workplace of the remote driver. The data connection between the remote workplace of the remote driver and the vehicle can be a "direct" mobile communication connection, so that the remote driver can send remote driving commands to the vehicle as to executed the driving task. If the mapping selects multiple available remote-drivers, the assigning process can comprise an algorithm that chooses at least one driver for this driving task. In an embodiment, the chosen driver can be the one that is best suited for this specific task. It is also possible to assign the driving task to more than one available remote driver, wherein the remote driver who accepts the driving task first has to proceed with the driving process.

This has the effect that remote driving tasks of a whole fleet of vehicles can be assigned in a flexible way to remote drivers that are suited to fulfill trailing task that is beyond the scope of the self-driving capabilities of the vehicle. The solution is highly scalable and can easily be adapted to the frequency require remote driving operations and/or to the number of vehicles in total. The handover to the driver should be smooth and proactive, so that the vehicle does not have to stop and the probability of traffic accidents is reduced.

In an embodiment, the information about the planned and/or the present driving task is being provided by the vehicle, an on-board personnel, and/or a time table.

This provides the advantage that various instances can trigger the generation of the information. If the vehicle detects traffic circumstances that are beyond its self-driving capabilities, its RC-OB can capture and send the information to the server on which the algorithms described above are being implemented. Another scenario is that an actual driver of the vehicle is not longer available to perform the driving task. This might be due to the case that is unexperienced or that he can no longer drive the train due to legal constraints. In these cases, he could press some kind of button, e.g. an remote control request button, that triggers the generation and sending of the information to the server. Due to a timetable and route it can be known in advance that the vehicle reaches a certain area with traffic characteristics that is beyond the self-driving capabilities of the vehicle. Hence, the generation and sending of the information can start at a certain time point and/or geographical position of the vehicle.

In an embodiment, the information about the planned and/or the present driving task comprises a remote driving request, a priority value, a vehicle ID, position of the vehicle, required driver qualification, required workplace equipment, a picture of the environment of the vehicle, traffic information, diagnostic information of the vehicle, date of the task, and/or estimated duration of the task.

This information is designed to provide flexible means to describe the driving task in technical parameters, so that it can be compared with parameters start in a database that are linked to workplace configurations and/or driver qualifications so that it is possible to search for and to find workplaces and/or drivers that match the driving task. The remote driving request can be configured to be of a datatype in order to initially indicate to the server to distributed the task to the task-creation algorithm. The information of the vehicle ID can be used to determine the necessary qualifications of the remote driver and the hardware requirements of the workplace. It is also possible to send these requirements directly. A picture of the environment of the vehicle can be used by the algorithm to analyze the traffic situation and to determine certain requirements. For example, an analysis of the picture and/or the geographical location can yield that the traffic situation is very complex so that a driver with a high rating score needs to be selected to fulfill driving task. The date of the task and/or the estimated duration of the task can be used to assess which driver will be available due to his timetable to execute the driving task.

The task-creation-algorithm additionally determines a remote workspace requirement profile based on the information, and wherein the mapping algorithm searches for remote workspaces that match the remote workspace requirement that are operated by a remote-driver who matches the remote-driver requirement profile and selects at least a subset of the remote workspace and remote-driver combinations that both match the requirement profiles, and assigning the driving task of the vehicle at least one of the selected combination.

In some situations, the driving task can be transformed to a generic driving task so that it can be operated by a generic workplace, too. In those cases, it is not necessary that the algorithms consider workspace requirements, too. However, this feature provides the advantage that the driving tasks are only distributed to remote-driver and remote workplace combinations, which are actually suited to execute the driving task. This will be especially the case if the driving task and/or the remote-workplace are non-generic.

In order to find the suited remote-driver and/or remote workplace, the mapping algorithm can have access to a database in which hardware configurations of remote-workplaces and remote-driver driver qualifications and ratings are stored. It is also possible to provide data connection properties of the respective workplaces - for example available bandwidth, latency, stability of the connection - in order to select the appropriate workspace if the driving task has certain demands regarding the data connection. For example, in high-traffic situations a low latency, a high bandwidth and a stable data connection might be required.

The method of any of the claims, wherein the remote-driver requirement profile comprises certificates and/or a driver-rating score. The certificates can be a kind of driving license that show that the remote-driver is allowed to drive certain vehicle types. The driver-rating score can be designed to be to rate the drivers on a scale like a ten star, or a five-star scale, wherein full ten or five stars could serve to indicate the best qualification.

This provides the advantage that it is possible to map the driving task not only to a formal certificate of the driver but also those actual skills.

In an embodiment, the driver-rating score is being adjusted due to driving experience of the vehicle type.

This provides the advantage that the driver-rating score can be dynamically adjusted to the actual skill of the driver, i.e. if he gets better or worse. The adjustment can be done by a human supervisor but also with a dedicated algorithm that can evaluate for example how fast the driving task was being executed by the driver and/or if ratable incidents occurred.

In an embodiment, the driving task of the vehicle is assigned to two remote-drivers with a different rating scores, wherein the vehicle is being operated remotely in a driving school mode. The driving school mode basically means that the remote-driver with a lower rating score is driving the vehicle, whereas the remote-driver with a higher rating score-supervision task and can optionally overrule the driving commands of the remote driver with a lower rating score.

This provides the advantage that remote drivers can learn to drive the vehicle in a controlled environment so to increase their rating scores.

In an embodiment, the mapping algorithm assess a database with performance characteristics of the remote drivers and/or the remote workspaces. Some aspects of the database have already been explained above. It is possible that the database also shows a real-time load factor of the remote drivers and/or the remote workplaces.

This provides the advantage that the driving task is not assigned to a remote driver and/or remote workspace combination that would be overloaded with this additional driving task.

In an embodiment, the database is updated event-based. Possible events are if a new hardware configuration is being implemented at a workplace, if the driver receives a new certificate, if the rating score of a driver changes, if a new driving task has been assigned to a driver and/or if driving task has been closed.

Such an event-based update process provides the advantage that the consumed data volume of the update process is being optimized because the update process is being only triggered if it has an effect on the database and the resulting mapping process. An updated database provides the advantage that the mapping algorithm does not operate on outdated data and hence makes mistakes in determining which remote-driver and/or remote-workspace combination is ready and capable to fulfill the driving task.

In an embodiment, the assigned remote-drivers can accept or reject the driving task.

This provides the advantage that the driving task can be executed as soon as possible by a remote-driver who is actually available. For example, if the driving task results from an emergency case, it is important that remote-driver takes over the driving as soon as possible. In this case, it is possible to send the driving task parallel to multiple remote-drivers and the one who accepts the driving task first (because he is ready, he is not on break, he has no other tasks) is the one to proceed with the driving task. On the other side, if a remote driver "thinks" is not capable of executing the driving task he can reject it so that it can be assigned to other remote drivers as soon as possible.

In an embodiment, closing conditions of the respective driving task are defined. Possible closing conditions can be that the automatic train operation onboard unit determines that it can run the vehicle in the self-driving mode on its own again, the vehicle has arrived at a certain destination point or that other closing criteria are met. It is possible to send appropriate signals that the closing condition is being met. For example, the remote-driver can press a button that signals to the mapping algorithm and/or to the database that the task is closed so that the database can be updated accordingly. It is also possible that the automatic train operation onboard unit or the remote control onboard unit sends an appropriate signal to the database, in particular when it takes over the vehicle in the self-driving mode.

This provides the advantage that it can be predicted how long a remote driver is engaged with a certain driving task and that the remote-driver is being freed from that task so that he can take over a further driving task.

In an embodiment, the assigning of the driving task of the vehicle is based on one or on a combination of the following algorithms:

- a cost function algorithm;

    o the cost function algorithm defines the various parameters - also named tasks - of the driving task and calculates in a kind of minimization procedure which remote-driver and/or remote-workplace combination should be chosen to fulfill all tasks with minimum "costs". This solution can be chosen as being the assigned remote-driver and/or remote workspace.

    o the advantage of the cost function algorithm is that it can in principle find an optimized solution for all driving tasks where each task is being considered;

    • a greedy algorithm;

        o the driving tasks can be ranked according to a combination of different parameters/tasks. Possible available remote-workplaces and/or remote operators will be assigned to the higher ranked tasks first. If the mapping algorithm finds multiple remote-workplaces and/or remote operators that are suited to execute the task, a subset, in particular one, of those remote-workplaces and/or remote operators can be selected by a random algorithm or it is possible to send the driving task request to multiple remote operators in parallel;
o this provides the advantage that the greedy algorithm is rather easy to implement and delivers results in a short time;

- a random algorithm; and/or

o the random algorithm can be applied to select a subset, in particular one, remote-workplace and/or remote operator;

- a neuronal network algorithm.

◦ with the help of a feedback loop, the neuronal network algorithm can "learn", which remote-workplace and/or remote operator is especially suited for certain driving tasks. It follows that after an appropriate training phase, the trained neuronal network algorithm can be used to assign a remote-workplace and/or a remote operator to a specified driving task.

According to the second aspect of the invention, a remote driving schedule module, RDS Module, configured to distribute remote driving tasks of vehicles to remote operators is being provided, as defined in independent claim 12.

The RDS module is implemented on a server or within the cloud environment and can be configured to execute the steps of claim 1.

The RDS module basically provides the same advantages as described within the context of the method disclosed above.

According to a third aspect of the invention a communication system configured to distribute remote driving tasks of vehicles to remote operators is being provided, wherein the communication system comprises

a communication, in particular a mobile communication network, designed to transmit information about a planned and/or a present remote driving task and other driving data of a vehicle and to transmit driving commands of a remote-driver to the vehicle,
a remote driving schedule module as described above.

The communication system basically provides the same advantages as described within the context of the method disclosed above.

According to a fourth aspect of the invention, a computer program comprising instructions which, when the program is executed by a computer, cause the computer to carry out the steps of the method of claim described above.

The computer program basically provides the same advantages as described within the context of the method disclosed above.

In the following, preferred implementation examples of the present invention are explained with reference to the accompanying figure:

Fig. 1:　shows a schematically a flowchart of a method according to the invention;

Fig. 2:　shows a schematically a task-creation-algorithm of the invention;

Fig. 3:　shows a schematically a first illustration of a mapping algorithm of the invention;

Fig. 4:　shows a schematically a second illustration of a mapping algorithm;

Fig. 5:　shows a communication system configured to distribute remote driving tasks;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

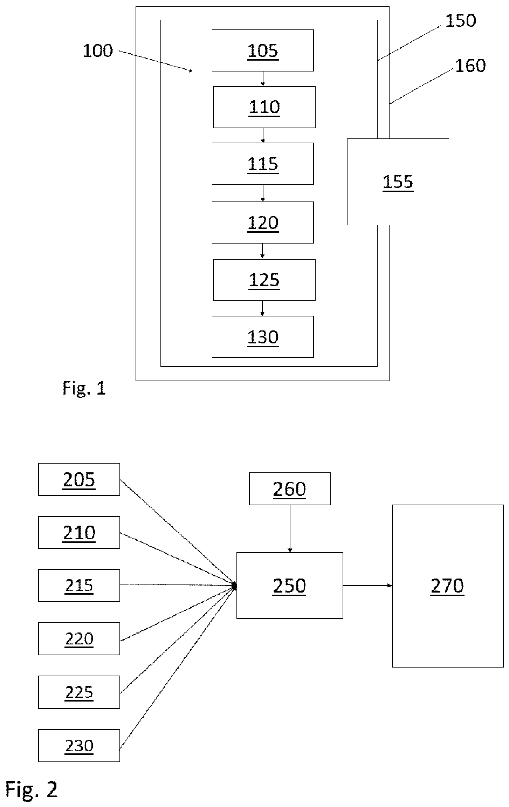

Fig. 1 shows a schematically a flowchart of a method 100 according to the invention.

In order to distribute remote driving tasks of vehicles like trains, drones, ships and/or farm vehicles to remote operators, the method comprises the following steps, wherein the method can be implemented on a server:

step 105: receiving information about a planned and/or a present remote driving task of a vehicle;

step 110: providing the information to a task-creation-algorithm, wherein the task-creation-algorithm determines a remote-driver requirement profile based on the information; if required a remote-workplace requirement profile is determined

step 115 providing the requirement profile to a mapping algorithm, wherein the mapping algorithm searches for remote-drivers and/or remote-workplaces that match the requirement profile and selects at least a subset the remote-drivers and/or remote-workplaces that match the requirement profile;

step 120: assigning the driving task of the vehicle to at least one of the remote-drivers and/or remote-workplaces of the mapping selection.

In order to actually drive the car by the remote-driver, the method can also comprise the step 125: task execution by the remote driver, wherein the remote driver triggers driving commands that are sent to the vehicle in order to perform driving operations;

The optional step 130 describes a "task closing" process that defines the end of a task execution and frees the remote driver from the current driving task.

The steps 105, 110 and 115 also describe the steps a computer program causes when executed on a computing unit, like a server.

A RDS module 150 according to the invention is also configured to execute the steps 105, 110 and 115. The RDS module 150 also comprises a communication interface 155 that is designed to exchange the appropriate data, in particular to receive information about a planned and/or a present remote driving task of a vehicle the information about a planned and/or a present remote driving task of a vehicle.

The method, the RDS module 150 and/or the computer program can be implemented on a server 160.

Fig. 2 shows that the RDS module 150 can receive driving tasks from different instances:

- on-board automation systems 205 of the vehicle that fail in proceeding automatic vehicle operation or are not designed to proceed autonomous in certain scenarios;

- on-board automation systems that have stopped after incidents 210 and require confirmation before operation can proceed;

- by time tables 215 and scheduling instances in case it is known in advance that infrastructure capabilities or conditions are not sufficient for self-driving;

- by on-board drivers 220 that cannot proceed; e.g. due to national/organizational/safety working regulations or physical reasons;

- regular operations 225 for depots, yards, and hump yards;

- planned and unplanned deployment runs 230 and first/last mile runs;

The RDS module 150 determines by means of task-creation algorithm implemented on a driving task creator 250 or based on configuration/a-priori knowledge that can be stored on a database 260, which (classes of) qualification for a remote operator is required and which specific (classes of) remote working places match to a specific driving-task due their equipment/layout/and other criteria.

The required qualifications are created as parameters that are designed for further computational assessment. Those required qualification for parameters are also simply called "tasks" within the context of the invention.

The driving task creator 250 can output a list 270 of the required qualification or tasks.

The list 270 of required qualifications or tasks can comprise task creation date, task creator, vehicle position, vehicle type, issue, required driver qualification, required workplace equipment, earliest starting time, due date, expected duration for task execution, a closing condition of the task, and/or priority values of the task.

The RDS 150 shall receive through driving task creator or based on configuration/a-priori knowledge priorities/urgency/due date and time for each remote operation driving task. For instance, priorities can also change over time, e.g. through traffic management systems or operators. One potential example is when the vehicle/train of this task is directly or indirectly disturbing operations of other vehicles/trains.

Closing conditions of the driving-task are being defined. Conditions for finalization of the driving-task can be provided to the remote-driver. These closing conditions depend on the issue that caused the task and can be:

- on-board automation system can be activated again and can proceed;

- incident management has been successfully closed by the remote-driver;

- vehicle has arrived at planned destination.

In particular, by assessing the database 260, the task creator 250 has information/configuration about available remote driver's workplaces.

The task creator 250 has information/configuration about vehicle/train types that can be operated from specific (or classes of) remote-driver's workplaces.

The task creator 250 has information/configuration, which remote driver is available in a certain office for multiple remote-driver's workplaces, which includes also information about currently executed tasks and pause times.

The task creator 250 has information/configuration about the (classes of) qualification of remote-drivers.

The task creator 250 has information on expected duration for the specific (classes of) driving tasks.

The task creator 250 has information about the remaining availabilities (in terms of time) of the remote-drivers. Remote-drivers can also be called remote-operators within the context of the invention.

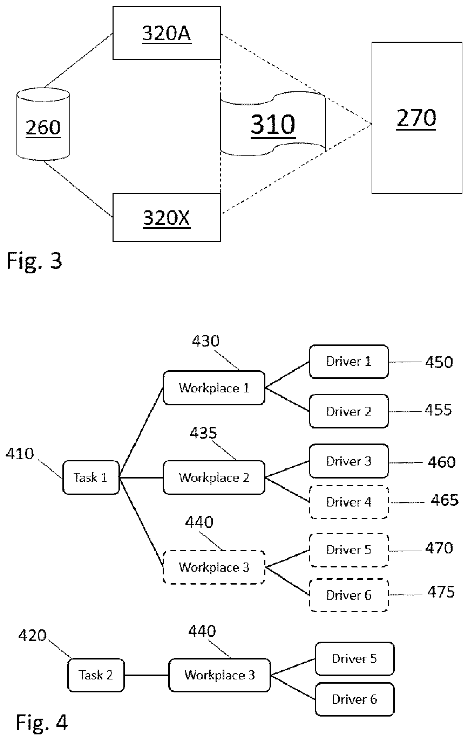

Fig. 3 shows a schematically a first illustration of a mapping algorithm of the invention.

The list 270 of required qualifications or tasks serves as input data for a mapping algorithm 310. Further input data for the mapping algorithm 310 is being provided by the database 260 that comprises properties of remote drivers 320A, X and about the equipment they use.

For example, the information of remote-driver 320 A, X can comprise a location of the office, working hours, hardware equipment, qualification, driver rating score, availability and/or others.

This information can comprise that remote-driver 320A as a qualification or certificate for a vehicle of a certain type, for example on ICE3, wherein remote-driver 320X has only a qualification or certificate for regional trains like RE of Deutsche Bahn.

The mapping algorithm 310 can use the previous mentioned information to map the driving task to a specific remote-driver and a specific remote working place that are both suited to fulfil the driving task with the required qualification (operator) and equipment (workplace) that are both in the same place/office, which is shown in Fig. 4.

Fig. 4 shows a mapping of a first driving task 410 and a second driving task 420.

The mapping algorithm 310 determines that remote-workplace_1 430 and remote-workplace_2 435 fulfil the requirements according to the list 270 of required qualifications, wherein a remote workplace_3 440 does not. Within Fig. 4 it is visualized by the dashed lines that a remote-workplace and/or a remote-driver does not fulfil the required qualifications for the driving task. As the remote workplace_3 440 does not fulfil the requirements of the driving task, the remote-driver_5 470 and the remote-driver_6 475 cannot be mapped even if they were to require the necessary qualification to execute the driving task because they "sit" on workplace workplace_3 440 at which the specific driving task cannot be executed.

Fig. 4 shows that both remote-workplace_1 430 and remote-workplace_2 435 can execute the specific driving task, wherein a remote-driver_4 465 does not show the necessary qualifications for this task while remote-driver_1 450, remote-driver_2 455 and remote-driver_3 460 process the necessary qualifications for the task.

It follows that the driving-task in the assignment to one, to all or to a subset of the remote drivers 450, 455, 460. The assignment process will be described in following parts of the description.

Fig. 4 also shows that the second driving task 420 can be executed by remote-workplace_3 440 and by the remote-driver_5 470 and by remote-driver_6 475.

Fig. 4 can also be described in other words as follows:
The remote-driver needs to be capable to fulfil that task in time, within working hour regulations. For each task, the RDS 150 can create a mapping of all possible solutions for executions of the task. Hence, for each task there might be a high number of matching remote-operators and a high number of remote-workplaces that can be used for execution of the task.

In the following, the assignment will be described:
The mapping result shows that execution of different driving-tasks can be in conflict with each other. E. g., driving-tasks might be mapped to the same remote operator and/or remote workplace and are to be executed at the same time. Also, these conflicts can change with each creation and each closing of a task or if certain resources become unplanned unavailable or will be added.

This can be solved by an assigning-algorithm, wherein various embodiments of such an assigning-algorithm are disclosed in the following:

i) a cost function algorithm:
The cost function algorithm can be designed to find a trade-off between competing "requirements" "tasks". The definition of driving tasks, remote operators, remote workplaces, and executions delays is given by

$$\mathbb{A} = \bigcup_a A_a$$ , i.e. the set of all tasks $A_a$

$$\mathbb{B} = \bigcup_b B_b$$ , i.e. the set of all remote operators $B_b$

$$\mathbb{C} = \bigcup_c C_c$$ , i.e. the set of all remote workplaces $C_c$

$$\mathbb{T} = \bigcup_\tau \mathrm{T}_\tau$$ , i.e. the set of all execution delays $\mathrm{T}_\tau$

Furthermore, let $\mathbb{M}_a$ be the set of all valid mappings for driving-task $A_a$ with remote operators and remote workplaces while $\mathbb{M}$ is the set of all valid mappings for all tasks.

$$\mathbb{M}_a = \bigcup \{B_b, C_c | A_a; B_b \in \mathbb{B} \wedge C_c \in \mathbb{C} \wedge \text{valid}\}$$

$$\mathbb{M} = \bigcup_a \mathbb{M}_a$$

Based on example in Fig. 4 the set of valid mappings for task 1 equals $\mathbb{M}_1 = \{B_1, C_1; B_2, C_1; B_3, C_2\}$
Cost functions for task $A_a$ are defined as

$f_a(B,C,\ \mathrm{T})$, i.e. financial costs related to task $A_a$
$g_a(B,C,\ \mathrm{T})$, i.e. time delays related to task $A_a$
$h_a(B,C,\ \mathrm{T})$, i.e. other costs related for task $A_a$

where financial costs f(B, C, T) is a function of the whole process and includes (normalized) costs for a specific remote operator B and remote workplace C, both for the duration of task execution, costs for occupation of the track, costs for penalties in case the track is blocked, the passenger or goods arrive delayed, and other costs. The costs caused by delays T will onbviously increase as T increases.
Cost function g(B, C, T) provides a cost value for the delays. Since financial aspects of delays are already covered by $f_a$(B, C, T), here it will be taken into account the delay itself, costs for loss of reputation due to delays, and others.
Finally, h(B, C, T) provides a (normalized) cost value for opportunity costs. Examples can cover but are not limited to scenarios where remote operators and remote workplaces are used for a task that could also be handled by less expensive operators and workplaces, resp. both resources could have executed a task that provides more value in terms of billing for the remote operation service.
Through the assignment the overall costs for all tasks shall be minimized be defining a specific valid mapping and a point in time for execution represented by the execution delay.

$$\min_{\substack{\{B,C\} \in \mathbb{M}_a \\ \mathrm{T}_a}} \sum_{A_a \in \mathbb{A}} [\alpha\, f_a(B, C, \mathrm{T}) + \beta\, g_a(B, C, \mathrm{T}) + \delta\, h_a(B, C, \mathrm{T})]$$

s.t. timing constrains for T
operator constraints for *B*
Each cost item can be weighted by $\alpha$, $\beta$, and $\gamma$, respectively, according to, e.g. operational and business preferences. In principle, these factors can also be set to individual factors $\alpha_a$, $\beta_a$, and $\gamma_a$ for each task or for certain classes of tasks different factors can be defined. The optimization is constrained by absolute timing constraints, e.g. the train shall not arrive later than a specific time. As one example, this is important for logistics, if a cargo train must not be too late in a harbour to allow shipment of containers. Moreover, the assignment of remote operators to a specific task is also subject of constraints, e.g. maximum working hours. Other constraints are already considered through identification of valid mappings. Constraints due to working hour regulations, and others, apply only in combination with a specific task and execution delay T. The assignment of execution delays T for each task has to take into account the fact, that a resource (operator or workplace) can be assigned only to one task at a time, that previous tasks need to be finished before a resource can be assigned to a new task, that there is time required for the resources to switch between tasks, and that the expected duration of each task (part of task properties) is subject to uncertainties. Here, additional timing buffers between adjacent tasks might be required. Additional factors can be added to the cost function, constraints can be added, and also cost function and constraints can be simplified if not relevant.

ii) a greedy algorithm

It is possible to apply a greedy algorithm. Assuming all driving-tasks are ranked according to a combination of different task parameters, e.g. remaining time for start of execution, given priority, issue type, etc.

The available remote-workplaces and remote-drivers will be assigned to the higher ranked driving-tasks first. If different valid mappings have been found for one task, then that mapping will be chosen where remote workplace and remote operator are available first.

A possible pseudo-code of the greedy algorithm:

```
Create List of ranked tasks 𝔸
       Repeat
           For all A_a ∈ 𝔸 without assignment do
               For all {B, C} ∈ 𝕄_a do

               if {B, C} is available then
                   assign A_a ← {B, C}
                   Update mappings 𝕄 w.r.t. availability of
                   B and C
                   Break;
               end;
           end;
       end;
       Update List of ranked tasks 𝔸
   End;
```

In addition, not only the list of tasks can be ranked but also the list of valid mappings $M_a$ can be ordered according to a predefined criterion, e.g. costs.

Considering the pseudo code, additional update cycles are required in case tasks are added, closed, or changed, or if properties and availabilities of remote operators and operator desks change.

iii) Besides previous approaches other classes of algorithms can be applied, too. This covers also all kinds of heuristics, artificial intelligence, machine learning, neural networks and others to solve the assignment problem.

For all approaches i) to iii), the best results can be achieved if the mapping and assignment is frequently updated based on instantaneous resource availability and creation/closing competing tasks. Of course, a task whose execution has already started is no longer subject of this optimization but the constraints for the operator and workplace with respect to availability have to be taken into account.

Task Execution:

If a remote-operator and a remote-workplace is assigned to the driving-task, that driving-task can be executed. In case the remote-driver cannot execute the task or if the workplace does not match to the needs of the driving task, the driving-task can be changed and a new mapping and assignment has to be created as described before.

Task Closing:

In case the remote-driver can successfully complete the driving-task, i.e. the definition of done has to be fulfilled, the driving task can be marked as being closed. This can be done by the remote-driver and/or it can be detected by the onboard system itself.

The information of the whole process can be considered for further processes. That might be but is not limited to billing in case remote operation services are executed for railway undertakings assigned to different legal entities.

In addition, the knowledge on task execution can be used to supervise skilling and skilling needs for the remote operator. One can also imagine, that the execution of a certain class of tasks requires proven experience in successful execution of tasks of a lower class, meaning less qualification/complexity.

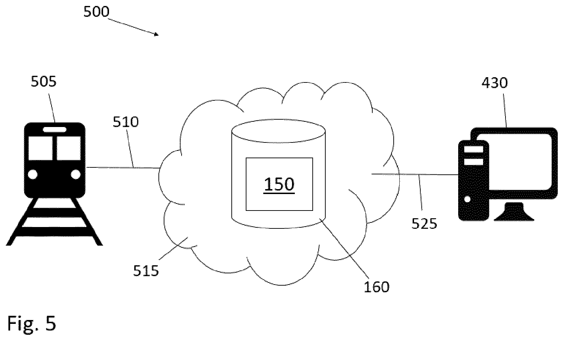

Fig. 5 shows a communication system configured to distribute remote driving tasks according to the invention.

A train 505 sends information about the planned and/or a present remote driving task over a first communication link 510, in particular a first mobile communication link 510, to a server 160 within a cloud or data center environment 515. The RDS module 150 is implemented on the server 160 and performs the tasks according to the method described above, in particular it assigns a certain remote-workplace 430 and remote-driver 450 that both fulfill the requirements to execute the driving task. Via a second communication link 525, the driving task is transmitted to the remote-workplace 430. The remote-driver then operates the train 505 remotely. The driving commands can be sent from the workspace 430 over the second communication link 525 and the first communication link 510 to the train 505 or by a direct communication link that is not shown within Fig. 5.

The described solution can handle the complete process of driving tasks for remote operations. As an extension, it is possible to have a stronger coupling of this process with the step of task execution. Hence, an arbitrary system can be used without the need of a direct interface to the RDS for the execution phase. (Of course, the RDS is still needed for planning information about the availability of the RDS systems. This can be provided by a direct interface to the remote workplaces or that information can be provided through a third party interface.)

In case of a central data centre/cloud based solution for the RDS and the remote operation, it is possible to integrate the execution into the RDS process. That is, on task execution that driving task can be directly activated by the RDS. In detail, it can be ensured that the required connection between vehicle/train and remote workplace is established, that possible configurations are automatic loaded and others. Also, in such a central infrastructure the RDS can have direct access to instantaneous availability information of each remote workplace.

**Claims**

1. A method to distribute remote driving tasks of vehicles to remote operators, wherein the method comprises

   • receiving information about a planned and/or a present remote driving task of a vehicle by a server;
   • providing the information to a task-creation-algorithm implemented on the server , wherein the task-creation-algorithm determines a remote-driver requirement profile based on the information, wherein the task-creation-algorithm additionally determines a remote workspace requirement profile based on the information,
   • providing the requirement profile to a mapping algorithm, wherein the mapping algorithm searches for remote-drivers that match the requirement profile and selects at least a subset the remote-drivers that match the requirement profile, and wherein the mapping algorithm searches for remote workspaces that match the remote workspace requirement that are operated by a remote-driver who matches the remote-driver requirement profile and selects at least a subset of the remote workspace and remote-driver combinations that both match the requirement profiles,
   • assigning the driving task of the vehicle at least one of the selected combination;
   wherein the mapping algorithm has access to a database in which hardware configurations of remote-workplaces and remote-driver qualifications and ratings are stored.

2. The method of claim 1, wherein the information about the planned and/or the present driving task is being provided by the vehicle, an on-board driver, and/or a time table.

3. The method of any of the claims, wherein the information about the planned and/or the present driving task comprises a remote driving request, a priority value, a vehicle ID, a picture of the environment of the vehicle, traffic information, diagnostic information of the vehicle, date of the task, and/or estimated duration of the task.

4. The method of any of the claims, wherein the remote-driver requirement profile comprises certificates and/or a driver-rating score.

5. The method of claim 4, wherein the driver-rating score is being adjusted due to driving experience of the vehicle.

6. The method of any of claims, wherein the driving task of the vehicle is assigned to two remote-drivers with a different rating score, wherein the vehicle is being operated remotely in a driving school mode.

7. The method of any of claims, wherein mapping algorithm assess a database with performance characteristics of the remote drivers and/or the remote workspaces.

8. The method of claim 7, wherein the database is updated event-based.

9. The method of any of claims, wherein the assigned remote-drivers can accept or reject the driving task.

10. The method of any of claims, wherein closing conditions of the respective driving task are defined.

11. The method of any of claims, wherein the assigning of the driving task of the vehicle is based on one or on a combination of the following algorithms:

      • a cost function algorithm;
      • a greedy algorithm;
      • a random algorithm; and/or
      • a neuronal network algorithm.

12. A remote driving schedule module, RDS Module, implemented on a server, configured to distribute remote driving tasks of vehicles to remote operators comprising

    a communication interface configured to receive information about a planned and/or a present remote driving task of a vehicle and to forward the driving task to at least one assigned remote-driver;
    a task-creation-algorithm that receives the information and is configured to determine a remote-driver requirement profile based on the information, wherein the task-creation-algorithm additionally is configured to determine a remote workspace requirement profile based on the information
    a mapping algorithm that is configured to receive the requirement profile as input, wherein the mapping algorithm is configured to search for remote-drivers that match the requirement profile and to selects at least a subset the remote-drivers that match the requirement profile, and wherein the mapping algorithm is configured to searche for remote workspaces that match the remote workspace requirement that are operated by a remote-driver who matches the remote-driver requirement profile and to select at least a subset of the remote workspace and remote-driver combinations that both match the requirement profiles
    an assigning algorithm that is configured to assign the driving task of the vehicle at least one of the selected combination;
    wherein the mapping algorithm is configured to access a database in which hardware configurations of remote-workplaces and remote-driver qualifications and ratings are stored.

13. Communication system configured to distribute remote driving tasks of vehicles to remote operators comprising

    a communication, in particular a mobile communication network, designed to transmit information about a planned and/or a present remote driving task and other driving data of a vehicle and to transmit driving commands of a remote-driver to the vehicle,
    a remote driving schedule module of claim 12.

14. A computer program comprising instructions which, when the program is executed by a computer, cause the computer to carry out the steps of the method of claim 1.

**Patentansprüche**

1. Verfahren zum Verteilen von Fernfahraufgaben von Fahrzeugen an Fernbediener, wobei das Verfahren umfasst:

   • Empfangen von Informationen über eine geplante und/oder eine gegenwärtige Fernfahraufgabe eines Fahrzeugs durch einen Server;
   • Bereitstellen der Informationen für einen Aufgabenerzeugungsalgorithmus, der auf dem Server implementiert ist, wobei der Aufgabenerzeugungsalgorithmus basierend auf den Informationen ein Fernfahreranforderungsprofil bestimmt, wobei der Aufgabenerzeugungsalgorithmus basierend auf den Informationen zusätzlich ein Fernarbeitsbereichsanforderungsprofil bestimmt,
   • Bereitstellen des Anforderungsprofils für einen Abbildungsalgorithmus, wobei der Abbildungsalgorithmus nach Fernfahrern sucht, die mit dem Anforderungsprofil übereinstimmen, und mindestens eine Teilmenge der Fernfahrer auswählt, die mit dem Anforderungsprofil übereinstimmen, und wobei der Abbildungsalgorithmus nach Fernarbeitsbereichen sucht, die mit der Fernarbeitsbereichsanforderung übereinstimmen, die von einem Fernfahrer betrieben werden, der mit dem Fernfahreranforderungsprofil übereinstimmt, und mindestens eine Teilmenge der Fernarbeitsbereichs- und Fernfahrerkombinationen auswählt, die beide mit den Anforderungsprofilen übereinstimmen,
   • Zuweisen der Fahraufgabe des Fahrzeugs an mindestens eine der ausgewählten Kombinationen;
   wobei der Abbildungsalgorithmus Zugriff auf eine Datenbank hat, in der Hardwarekonfigurationen von Fernarbeitsplätzen und Fernfahrerqualifikationen und - bewertungen gespeichert sind.

2. Verfahren nach Anspruch 1, wobei die Informationen über die geplante und/oder die gegenwärtige Fahraufgabe von dem Fahrzeug, einem an Bord befindlichen Fahrer und/oder einer Zeittabelle bereitgestellt werden.

3. Verfahren nach einem der Ansprüche, wobei die Informationen über die geplante und/oder die gegenwärtige Fahraufgabe eine Fernfahranforderung, einen Prioritätswert, eine Fahrzeug-ID, ein Bild der Umgebung des Fahrzeugs, Verkehrsinformationen, Diagnoseinformationen des Fahrzeugs, ein Datum der Aufgabe und/oder eine geschätzte Dauer der Aufgabe umfassen.

4. Verfahren nach einem der Ansprüche, wobei das Fernfahreranforderungsprofil Zertifikate und/oder eine Fahrerbewertungspunktzahl umfasst.

5. Verfahren nach Anspruch 4, wobei die Fahrerbewertungspunktzahl aufgrund der Fahrerfahrung des Fahrzeugs angepasst wird.

6. Verfahren nach einem der Ansprüche, wobei die Fahraufgabe des Fahrzeugs an zwei Fernfahrer mit unterschiedlicher Bewertungspunktzahl zugewiesen wird, wobei das Fahrzeug in einem Fahrschulmodus fernbetrieben wird.

7. Verfahren nach einem der Ansprüche, wobei der Abbildungsalgorithmus eine Datenbank mit Leistungsmerkmalen der Fernfahrer und/oder der Fernarbeitsbereiche bewertet.

8. Verfahren nach Anspruch 7, wobei die Datenbank ereignisbasiert aktualisiert wird.

9. Verfahren nach einem der Ansprüche, wobei die zugewiesenen Fernfahrer die Fahraufgabe annehmen oder ablehnen können.

10. Verfahren nach einem der Ansprüche, wobei Abschlussbedingungen der jeweiligen Fahraufgabe definiert werden.

11. Verfahren nach einem der Ansprüche, wobei das Zuweisen der Fahraufgabe des Fahrzeugs auf einem oder einer Kombination der folgenden Algorithmen basiert:

    • einem Kostenfunktionsalgorithmus;
    • einem Greedy-Algorithmus;
    • einem Zufallsalgorithmus; und/oder
    • einem neuronalen Netzwerkalgorithmus.

12. Fernfahrplanmodul, RDS-Modul, das auf einem Server implementiert und dazu eingerichtet ist, Fernfahraufgaben von Fahrzeugen an Fernbediener zu verteilen, umfassend:

eine Kommunikationsschnittstelle, die dazu eingerichtet ist, Informationen über eine geplante und/oder eine gegenwärtige Fernfahraufgabe eines Fahrzeugs zu empfangen und die Fahraufgabe an mindestens einen zugewiesenen Fernfahrer weiterzuleiten;

einen Aufgabenerzeugungsalgorithmus, der die Informationen empfängt und dazu eingerichtet ist, basierend auf den Informationen ein Fernfahreranforderungsprofil zu bestimmen, wobei der Aufgabenerzeugungsalgorithmus zusätzlich dazu eingerichtet ist, basierend auf den Informationen ein Fernarbeitsbereichsanforderungsprofil zu bestimmen,

einen Abbildungsalgorithmus, der dazu eingerichtet ist, das Anforderungsprofil als Eingabe zu empfangen, wobei der Abbildungsalgorithmus dazu eingerichtet ist, nach Fernfahrern zu suchen, die mit dem Anforderungsprofil übereinstimmen, und mindestens eine Teilmenge der Fernfahrer auszuwählen, die mit dem Anforderungsprofil übereinstimmen, und wobei der Abbildungsalgorithmus dazu eingerichtet ist, nach Fernarbeitsbereichen zu suchen, die mit der Fernarbeitsbereichsanforderung übereinstimmen, die von einem Fernfahrer betrieben werden, der mit dem Fernfahreranforderungsprofil übereinstimmt, und mindestens eine Teilmenge der Fernarbeitsbereichs- und Fernfahrerkombinationen auszuwählen, die beide mit den Anforderungsprofilen übereinstimmen,

einen Zuweisungsalgorithmus, der dazu eingerichtet ist, die Fahraufgabe des Fahrzeugs an mindestens eine der ausgewählten Kombinationen zuzuweisen;

wobei

der Abbildungsalgorithmus dazu eingerichtet ist, auf eine Datenbank zuzugreifen, in der Hardwarekonfigurationen von Fernarbeitsplätzen und Fernfahrerqualifikationen und -bewertungen gespeichert sind.

13. Kommunikationssystem, das dazu eingerichtet ist, Fernfahraufgaben von Fahrzeugen an Fernbediener zu verteilen, umfassend:

ein Kommunikationsnetzwerk, insbesondere ein Mobilkommunikationsnetzwerk, das dazu ausgelegt ist, Informationen über eine geplante und/oder eine gegenwärtige Fernfahraufgabe und andere Fahrdaten eines Fahrzeugs zu übertragen und Fahrbefehle eines Fernfahrers an das Fahrzeug zu übertragen,

ein Fernfahrplanmodul nach Anspruch 12.

14. Computerprogramm, umfassend Anweisungen, die, wenn das Programm von einem Computer ausgeführt wird, den Computer dazu veranlassen, die Schritte des Verfahrens nach Anspruch 1 auszuführen.

**Revendications**

1. Procédé de distribution de tâches de conduite à distance de véhicules à des opérateurs distants, dans lequel le procédé comprend

• la réception d'informations relatives à une tâche de conduite à distance planifiée et/ou actuelle d'un véhicule par un serveur ;

• la fourniture des informations à un algorithme de création de tâches implémenté sur le serveur, dans lequel l'algorithme de création de tâches détermine un profil d'exigences pour le conducteur distant sur la base des informations, dans lequel l'algorithme de création de tâches détermine en outre un profil d'exigences de poste de travail distant sur la base des informations ;

• la fourniture du profil d'exigences à un algorithme de mappage, dans lequel l'algorithme de mappage recherche les conducteurs distants qui correspondent au profil d'exigences et sélectionne au moins un sous-ensemble des conducteurs distants qui correspond au profil d'exigences et dans lequel l'algorithme de mappage recherche les postes de travail distants qui correspondent aux exigences de poste de travail distant qui sont exploités par un conducteur distant qui correspond au profil d'exigences de conducteur distant, puis sélectionne au moins un sous-ensemble des combinaisons de poste de travail distant et de conducteur distant qui correspondent tous deux aux profils d'exigences,

• l'attribution à la tâche de conduite du véhicule d'au moins une des combinaisons sélectionnées,

dans lequel l'algorithme de mappage a accès à une base de données dans laquelle les configurations matérielles des postes de travail distants et les qualifications et évaluations des conducteurs distants sont mémorisés.

2. Procédé selon la revendication 1, dans lequel les informations relatives à la planification et/ou la tâche de conduite actuelle sont fournies par le véhicule, un conducteur embarqué et/ou un emploi du temps.

**3.** Procédé selon une quelconque des revendications, dans lequel les informations relatives à la tâche de conduite prévue et/ou actuelle comprennent une demande de conduite à distance, une valeur de priorité, un identifiant de véhicule, une image de l'environnement du véhicule, des informations relatives au trafic, des informations de diagnostic du véhicule, la date de la tâche et/ou la durée estimée de la tâche.

**4.** Procédé selon une quelconque des revendications, dans lequel le profil d'exigence du conducteur à distance comprend des certificats et/ou une note de conducteur.

**5.** Procédé selon la revendication 4, dans lequel la note de conducteur est ajustée en fonction de l'expérience de conduite du véhicule.

**6.** Procédé selon une quelconque des revendications, dans lequel la tâche de conduite du véhicule est attribuée à deux conducteurs à distance ayant des notes différentes, dans lequel le véhicule est piloté à distance en mode auto-école.

**7.** Procédé selon une quelconque des revendications, dans lequel un algorithme de mappage évalue une base de données contenant les caractéristiques de performance des conducteurs à distance et/ou des postes de travail à distance.

**8.** Procédé selon la revendication 7, dans lequel la base de données est mise à jour en fonction des événements.

**9.** Procédé selon une quelconque des revendications, dans lequel les conducteurs à distance attribués peuvent accepter ou refuser la tâche de conduite.

**10.** Procédé selon une quelconque des revendications, dans lequel les conditions de clôture de la tâche de conduite respective sont définies.

**11.** Procédé selon une quelconque des revendications, dans lequel l'attribution de la tâche de conduite du véhicule est basée sur un ou une combinaison des algorithmes suivants :

    • un algorithme de fonction de coût,
    • un algorithme glouton,
    • un algorithme aléatoire ; et/ou
    • un algorithme de réseau neuronal.

**12.** Module de planification de conduite à distance (module RDS) implémenté sur un serveur, configuré pour distribuer les tâches de conduite à distance des véhicules aux opérateurs distants, comprenant

    une interface de communication configurée pour recevoir des informations relatives à une tâche de conduite à distance planifiée et/ou actuelle d'un véhicule et pour transmettre la tâche de conduite à au moins un conducteur à distance attribué ;
    un algorithme de création de tâches qui reçoit les informations et est configuré pour déterminer un profil d'exigences de conducteur distant sur la base des informations, dans lequel l'algorithme de création de tâches est également configuré pour déterminer un profil d'exigences pour un poste de travail distant sur la base des informations ;
    un algorithme de mappage est configuré pour recevoir le profil d'exigences comme entrée, dans lequel l'algorithme de mappage est configuré pour rechercher des conducteurs distants qui correspondent au profil d'exigences et sélectionner au moins un sous-ensemble de conducteurs distants qui correspondent au profil d'exigence, et dans lequel l'algorithme de mappage est configuré pour rechercher des postes de travail distants qui correspondent aux exigences de poste de travail distant qui sont exploités par un conducteur distant qui correspond au profil d'exigences et sélectionner au moins un sous-ensemble de combinaisons de poste de travail distant et de conducteur distant qui correspondent tous deux aux profils d'exigences ;
    un algorithme d'attribution qui est configuré pour attribuer à la tâche de conduite du véhicule au moins une combinaison sélectionnée ;
    dans lequel
    l'algorithme de mappage est configuré pour accéder à une base de données dans laquelle les configurations matérielles des postes de travail distants et les qualifications et évaluations des conducteurs distants sont mémorisés.

**13.** Système de communication configuré pour distribuer des tâches de conduite à distance de véhicules à des opérateurs distants comprenant

un réseau de communication, en particulier un réseau de communication mobile conçu pour transmettre des informations relatives à une tâche de conduite à distance planifiée et/ou actuelle et d'autres données de conduite d'un véhicule et pour transmettre des commandes de conduite d'un conducteur à distance au véhicule,
un module de planification de conduite à distance selon la revendication 12.

**14.** Programme informatique comprenant des instructions qui, lorsque le programme est exécuté par un ordinateur, amènent l'ordinateur à exécuter les étapes du procédé selon la revendication 1.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020062267 A1

- US 2020282980 A1